# EUROPÄISCHE PATENTSCHRIFT

(11) **EP 1 303 181 B1**
(45) Veröffentlichungstag und Bekanntmachung des Hinweises auf die Patenterteilung: **24.03.2004**
(21) Anmeldenummer: 01957991.1
(22) Anmeldetag: 20.07.2001
(51) Int. Cl.: A01K 1/03

(54) **KÄFIGDECKEL**
CAGE LID
COUVERCLE DE CAGE

(30) Priorität: 22.07.2000 DE 10035818
(43) Veröffentlichungstag der Anmeldung: 23.04.2003
(73) Patentinhaber: Deutsches Krebsforschungszentrum Stiftung des öffentlichen Rechts, 69120 Heidelberg (DE)
(72) Erfinder: ZILLMANN, Uwe, 69412 Eberbach (DE); DÄHMEL, Werner, 69250 Schönau (DE); LEHR, Bernd, 69207 Sandhausen (DE)
(74) Vertreter: Weber, Walter, Dipl.-Ing.(FH)
(86) Internationale Anmeldenummer: PCT/EP2001/008382
(87) Internationale Veröffentlichungsnummer: WO 2002/007507

(56) Entgegenhaltungen:
- US-A- 3 334 614
- US-A- 3 537 428
- US-A- 5 048 459

## Beschreibung

Die Erfindung betrifft einen Käfigdeckel für einen Tierkäfig, vgl. z.B. die Druckschrift US-A-3 334 614.

Ein derartiger Käfigdeckel ist ebenfalls aus dem Prospekt "Super Mouse Micro-Isolator System" (1997) der Firma Bio Medic Corporation bekannt. Um die Tiere mit Futter oder Wasser zu versorgen, ist unter diesem Käfigdeckel eine Raufe angebracht, die über die ganze Breite des Käfigs tief in diesen hineinragt. Um zu verhindern, daß bei einem Beschicken der Raufe mit Futter und/oder einer Wasserflasche die Tiere entweichen können, schließt sich an die Raufe ein Gitter an, das sich unterhalb des Käfigdeckels über die gesamte Käfigöffnung erstreckt. Der Nachteil dieser Ausgestaltung besteht darin, daß der Käfigdeckel zur Beschickung der Raufe abgenommen werden muß, wodurch ein intensiver Luftaustausch zwischen Umwelt und Käfig stattfindet. Dadurch können Schmutz, Kleinstpartikel oder Infektionen in den Käfig oder vom Käfig in die Außenwelt gelangen. Im Zweifel muß also der Käfig aus dem Regal entnommen werden und die Beschickung mit Futter oder Wasser muß in einer nach außen isolierten Umsetzstation vorgenommen werden.

Der Erfindung liegt daher die Aufgabe zugrunde, einen Käfigdeckel verfügbar zu machen, der zur Versorgung mit Futter oder Wasser nicht abgenommen werden muß.

Die Aufgabe wird erfindungsgemäß dadurch gelöst, daß der Käfigdeckel zwei Durchbrechungen aufweist, wobei an der Käfigdeckelunterseite einer Durchbrechung ein Futtersilo und an die andere Durchbrechung ein Flaschensilo angefügt ist, und daß die Durchbrechungen durch Deckel verschließbar sind.

Der Vorteil besteht darin, daß für die Versorgung der Tiere mit Futter oder Wasser jeweils nur eine kleine Öffnung im Käfigdeckel geöffnet werden muß. Dadurch wird die Gefahr, daß Schmutzteile oder Kontaminationen in den Käfig gelangen, weitgehend herabgesetzt. Wird der Käfig mit Überdruck beaufschlagt, kann durch die kleinen Öffnungen praktisch nichts in den Käfig gelangen. Wird der Käfig mit Unterdruck beaufschlagt, so kann praktisch nichts aus dem Käfig herausgelangen, wodurch auch eine Futter- und Wasserversorgung unter Hygiene- oder Quarantänebedingungen möglich ist. Biogene Gase und/oder Feuchte können abgeführt werden. Außerdem wird gegenüber dem eingangs genannten Stand der Technik die Raufe mit dem Gitter eingespart.

Es ist dabei ohne weiteres eine Ausgestaltung von Futtersilo und Flaschensilo möglich, die nur wenig der Fläche des Deckels in Anspruch nimmt. Dadurch läßt sich ein Filter trotz der Anordnung von Futtersilo und Wassersilo in einer Größe vorsehen, die einen großen Luftaustausch ermöglicht, der wahlweise aus dem Käfig heraus, also im Überdruckbetrieb oder zur Hygiene oder Quarantäne im Unterdruckbetrieb in den Käfig hinein erfolgen kann. Auch ohne Lüftungseinheit ist der Filter groß genug, um einen Luftaustausch im überlebensnotwendigen Maß für die Tiere zu gewährleisten. Da sowohl Flaschensilo als auch Futtersilo wenig Raum einnehmen, ist der Lebensraum für die Tiere gegenüber Käfigen mit Raufen wesentlich vergrößert und es ist ohne weiteres eine Ausgestaltung möglich, bei der Tiere um Flaschen- und Futtersilo herumgehen können. Dies erhöht die Aktivität und das Wohlbefinden der Tiere.

Vorzugsweise wird der Käfigdeckel derart ausgebildet, daß das Flaschensilo für eine senkrechte Flaschenpositionierung ausgebildet ist, wobei die Ausgestaltung des Flaschensilos derart mit den einzufügenden Flaschen abgestimmt ist, daß letztere im Bereich ihres nach oben zeigenden Bodens ergriffen werden können. Dies ermöglicht eine sehr leichte Handhabung beim Auswechseln der Flaschen. Dabei werden die Flaschen zweckmäßigerweise mit einer Öffnung nach unten in das Flaschensilo eingefügt, wobei dieses einen Haltekragen für die Halterung von Flaschen aufweist. Die Flaschenöffnung ist dann derart ausgebildet, daß sie nur beim Trinken der Tiere Wasser abgibt.

Zweckmäßigerweise wird das Futtersilo derart ausgebildet, daß es im wesentlichen eine zylindrische Form aufweist und daher einen ähnlichen Raum einnimmt wie das Flaschensilo mit den Flaschen. Dabei ist es von Vorteil, wenn die Bemessungen von Futterkorb und Flaschensilo derart sind, daß sich die Tiere dazwischen bewegen können. Dies führt zu einer wesentlichen Vergrößerung des Lebensraums der Tiere und gleichzeitig bietet diese Ausgestaltung Bewegungsmöglichkeiten, welche die Aktivität und das Wohlbefinden der Tiere wesentlich erhöhen. Es hat sich gezeigt, daß viele Tiere das zusätzliche Kletterangebot gerne annehmen.

Die Deckel zum Verschließen der Durchbrechungen für das Futtersilo und das Flaschensilo sind zweckmäßigerweise als Metalldeckel mit einem konischen, dicht schließenden Sitz ausgebildet. Der eine Teil dieses Sitzes ist an einen Rand am Käfigdeckel und der andere Teil am Verschlußdeckelrand angeordnet. Dadurch werden zusätzliche Dichtungen vermieden und die Autoklavierfähigkeit ist gewährleistet.

Die Durchbrechungen nehmen relativ wenig Fläche des Käfigdeckels in Anspruch. Werden die Durchbrechungen zusätzlich im Bereich einer Stirnseite ― also am Deckelflächenrand einer Schmalseite ― angeordnet, ist es möglich, daß die Käfigdeckelfläche außerhalb der Durchbrechungen für die Unterbringung eines großflächigen Filters zur Verfügung steht. Dieser Filter dient zweckmäßigerweise dazu, daß der Tierkäfig mit der Außenluft in Verbindung steht, wodurch sich sowohl ein Unterdruck- als auch ein Überdruckbetrieb realisieren läßt. Im ersten Fall tritt die Luft durch den Filter in den Käfig ein und im zweiten Fall verläßt die Luft durch den Filter den Käfig. Es kann jedoch auch vorgesehen sein, daß der Filter von einer Haube überspannt wird, die einen in ein Abluftsystem mündenden Ausgang aufweist, um beispielsweise biogene Gase und/oder Feuchte auch im Überdruckbetrieb abzuführen.

Der Filter besteht vorteilhafterweise aus zwei durchbrochenen Platten, zwischen die ein Filtermaterial eingefügt ist. Dabei kann eine der durchbrochenen Platten zur Einfügung des Filtermaterials wegbewegbar ausgebildet sein. Es ist dabei möglich, daß eine der Platten aufklappbar oder verschiebbar ausgebildet ist. Im geschlossenen Zustand ist das eingelegte Filtermaterial sicher positioniert. Der Vorteil dieser Ausgestaltung besteht darin, daß relativ preiswertes Filtermaterial, z. B. Glasfasergewebe, welches als Meterware erhältlich ist, verwendet werden kann.

Vorzugsweise wird die dem Tierkäfig zugewandte Platte als feinmaschiges Gitter ausgebildet, damit Tiere nicht das Filtermaterial beschädigen, z. B. Anknabbern durch Nagetiere, und trotzdem ein hoher Flächenanteil an Öffnungen realisiert ist. Auch die Durchbrechungen der außenliegenden Platte sollten einen hohen Flächenanteil aufweisen, damit ein effektiver und ausreichender Luftdurchsatz durch den Filter möglich ist. Um zu gewährleisten, daß insbesondere für Quarantänebedingungen im Unterdruckbetrieb jeglicher Luftaustausch in gefilteter Form vor sich geht, wird zweckmäßigerweise vorgesehen, daß der Käfigdeckel in seinem Auflagebereich auf dem Tierkäfig eine umlaufende Dichtung aufweist.

Die Erfindung wird nachfolgend anhand eines in der Zeichnung dargestellten Ausführungsbeispiels erläutert. Es zeigen
- **Fig. 1**: einen Tierkäfig mit einem erfindungsgemäßen Käfigdeckel und
- **Fig. 2**: eine Ausgestaltung des Filters und
- **Fig. 3**: eine alternative Ausgestaltung des Filters.

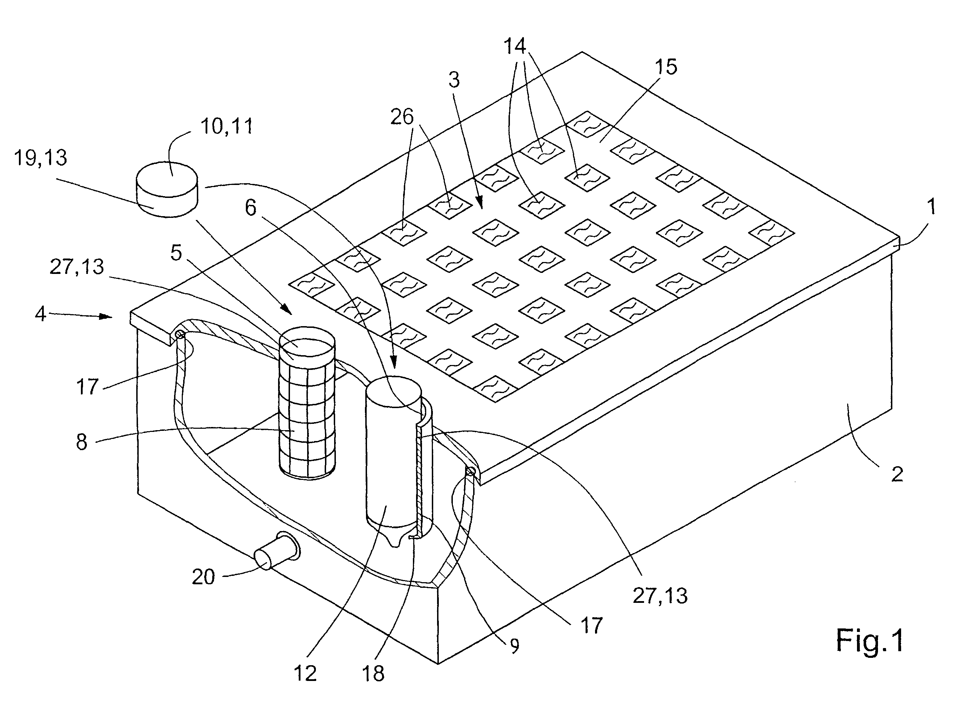

**Fig. 1** zeigt einen Tierkäfig 2 mit einem erfindungsgemäßen Käfigdeckel 1. Wesentlich dabei ist die Ausgestaltung eines Futtersilos 8 und eines Flaschensilos 9, wobei nach Abheben des jeweiligen Deckels 10 und 11 eine Beschickung mit Futter oder einer Flasche 12 möglich ist, ohne daß der Käfigdeckel 1 entfernt werden muß. Eine solche Beschickung kann also, wie oben beschrieben, auch unter Hygiene- oder Quarantänebedingungen erfolgen. Futtersilo 8 und Flaschensilo 9 sind derart ausgebildet, daß sie weniger Fläche beanspruchen wie die bekannten Raufen. Dadurch ist es trotz der Anordnung eines Futtersilos 8 und eines Flaschensilos 9 möglich, einen großflächigen Filter 3 im Käfigdeckel 1 vorzusehen. Die große Fläche gestattet die Ausbildung eines Filters 3, welcher einen guten Luftaustausch und einen geringen Strömungswiderstand bei guter Filterwirkung gewährleistet.

Für die Anordnung des Futtersilos 8 und des Flaschensilos 9 unter Inanspruchnahme einer geringen Fläche des Käfigdeckels 1 sind zwei Durchbrechungen 5 und 6 in den Käfigdeckel 1 eingebracht, die sich im Bereich einer Stirnseite 4 des Käfigdeckels 1 befinden. Dadurch ist auch ein großer Bereich für den Filter 3 verfügbar. Es handelt sich zweckmäßigerweise um runde Durchbrechungen 5, 6, an welche Ränder 27 als Sitz 13 für die Deckel 10 und 11 angefügt sind. Die Ränder 27 und der Verschlußdeckelrand 19 besitzen jeweils einen Konus des Sitzes 13, so daß ohne eine Dichtung ein dichter Verschluß möglich ist.

Das Futtersilo 8 besteht aus einem zylinderförmigen Gitter, das an die Durchbrechung 5 angefügt ist. Zur Halterung einer Flasche 12 ist an die Durchbrechung 6 eine Flaschensilo 9 angefügt, das an seiner unteren Seite einen Haltekragen 18 für die Halterung einer Flasche 12 aufweist. Dabei ist das Flaschensilo 9 mit einem Haltekragen 18 derart bemessen, daß der untere Teil der Flasche 12, der bei dieser Anordnung oben liegt, ergreifbar ist und dadurch die Flaschen 12 leicht ausgewechselt werden können. Der anzufügende Deckel 11 muß dann einen so hohen Verschlußdeckelrand 19 und/oder die Durchbrechung 6 einen so hohen Rand aufweisen, daß bei verschlossener Durchbrechung 6 der Verschlußdeckel 11 auf dem Sitz 13 dicht aufliegt. Die Flasche 12 weist mit ihrer Öffnung nach unten, wobei diese derart ausgebildet ist, daß die Flüssigkeit nur beim Trinken der Tiere austritt.

Der Tierkäfig 2 weist bei der dargestellten Ausführungsform nur einen Anschluß 20 auf, der vorzugsweise als passende Kupplungshälfte für die regalseitige Verschlußkupplung ausgebildet ist. Bei der vorgeschlagenen Ausgestaltung des Käfigdeckels 1 mit einem Filter 3 reicht ein solcher Anschluß 20 aus, da bei einem Unterdruck-betrieb die Luft aus dem Tierkäfig 2 gesaugt wird und durch den Filter 3 nachströmt, wodurch Hygiene- und Quarantänebedingungen hergestellt werden können. Die herausgesaugte Luft kann zweckentsprechend dekontaminiert werden. Im Überdruckbetrieb wird Luft in den Käfig gepumpt und sie tritt aus dem Filter 3 aus, der für diesen Fall derart ausgebildet sein kann, daß er Verunreinigungen, Allergene und Geruch abhält.

Selbstverständlich läßt sich der erfindungsgemäße Käfigdeckel 1 auch für Käfige verwenden, die mehrere Luftanschlüsse aufweisen, beispielsweise separate Anschlüsse für Luftzu- und ―abfuhr, wobei dann auf einen Filter 3 verzichtet werden kann. Auch in diesem Fall besteht der Vorteil des vergrößerten Lebensraums für die Tiere. Es ist auch denkbar, eine Haube für den Deckel vorzusehen, welche beispielsweise einen Luftabzug für die Entfernung biogener Gase und/oder Luftfeuchte aufweist.

**Fig. 1** zeigt weiterhin die Ausgestaltung eines Filters 3. Dieser ist am Käfigdeckel 1 angeordnet und großflächig ausgebildet. Damit die Luft auf jeden Fall durch den Filter 3 strömt, ist vorgesehen, daß der Käfigdeckel 1 eine umlaufende Dichtung 17 aufweist, wodurch der Käfigdeckel 1 dicht mit einem Tierkäfig 2 verbunden werden kann. Der Filter 3 besteht aus einer außenliegenden, durchbrochenen Platte 15, deren Durchbrechung 26 derart ausgebildet sind, daß die Platte 15 möglichst eine große Öffnungsfläche aufweist. Darunter läßt sich das Filtermaterial 14 anordnen, welches nach der Innenseite des Käfigs 2 durch eine durchbrochene Platte 16 gehalten wird, welche zweckmäßigerweise als feinmaschiges Gitter ausgebildet ist, damit Nagetiere nicht das Filtermaterial 14 beschädigen können.

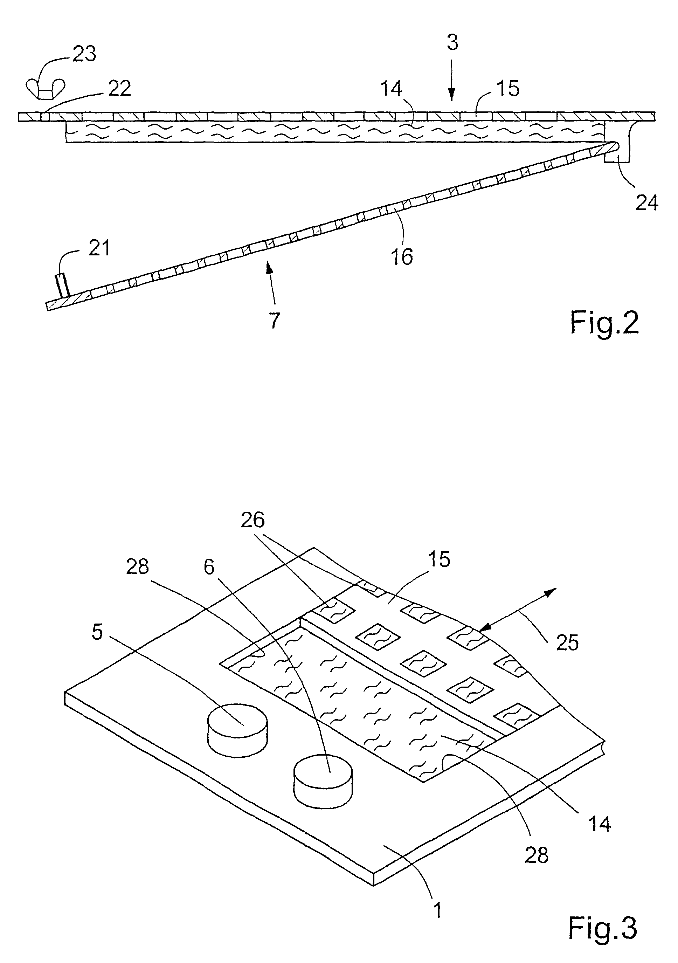

Die dem Käfig zugewandte durchbrochene Platte 16 oder die außenliegende durchbrochene Platte 15 kann wegbewegbar ausgebildet sein, um das Filtermaterial 14 wechseln zu können. Eine Möglichkeit einer Wegbewegbarkeit zeigt **Fig. 2**, wobei die durchbrochene Platte 16 mittels einer Lagerung 24 schwenkbar gelagert ist, damit sich auf diese Weise das Filtermaterial 14 auswechseln läßt. Nach Aufnahme oder Auswechseln eines Filtermaterials 14 ist die durchbrochene Platte 16 mittels einer Schraube 21, einer Bohrung 22 und einer Mutter 23 befestigbar. Die Fig. 3 zeigt eine weitere Ausgestaltung eines Käfigdeckels 1 mit einem Filter 3, bei dem die durchbrochene Platte 15 in Richtung des Doppelpfeils 25 verschiebbar ist, um das Filtermaterial 14 wechseln zu können. Zu diesem Zweck wird eine Führung 28 für die Platte 15 vorgesehen, die eine hohe Dichtigkeit und eine Arretierbarkeit für den geschlossenen Zustand aufweist.

Diese Ausgestaltungsformen sind selbstverständlich nur beispielhaft. Der Filter 3 kann auch weggelassen werden oder der Käfigdeckel 1 könnte auch mit Luftanschlüssen versehen sein oder er kann zur Abdeckung mittels einer Haube ausgebildet sein. Wesentlich ist, daß sich der Käfigdeckel 1 so ausgestalten läßt, daß er sich mit sämtlichen Käfigen der europäischen und amerikanischen Norm kombinieren läßt, gegebenenfalls müssen diese mit einem Anschluß 20 versehen werden.

### Bezugszeichenliste

- 1: Käfigdeckel
- 2: Tierkäfig
- 3: Filter
- 4: Stirnseite
- 5: Durchbrechung
- 6: Durchbrechung
- 7: Käfigdeckelunterseite
- 8: Futtersilo
- 9: Flaschensilo
- 10: Deckel
- 11: Deckel
- 12: Flasche
- 13: Sitz der Deckel
- 14: Filtermaterial
- 15: durchbrochene Platte (außen)
- 16: durchbrochene Platte (innen)
- 17: umlaufende Dichtung
- 18: Haltekragen
- 19: Verschlußdeckelrand
- 20: Anschluß des Käfigs
- 21: Schraube
- 22: Bohrung
- 23: Mutter
- 24: Lagerung der durchbrochenen Platte 16
- 25: Doppelpfeil: Verschiebbarkeit der außenliegenden durchbrochenen Platte
- 26: Durchbrechungen der außenliegenden Platte
- 27: Ränder, an die Durchbrechungen 5, 6 angefügt
- 28: Führung für eine verschiebbare Platte

## Patentansprüche

1. Käfigdeckel (1) für einen Tierkäfig (2),
**dadurch gekennzeichnet,**
**daß** er zwei Durchbrechungen (5, 6) aufweist, wobei an der Käfigdeckelunterseite (7) einer Durchbrechung (5) ein Futtersilo (8) und an die andere Durchbrechung (6) ein Flaschensilo (9) angefügt ist, und daß die Durchbrechungen (5, 6) durch Deckel (10, 11) verschließbar sind.

2. Käfigdeckel nach Anspruch 1,
**dadurch gekennzeichnet,**
**daß** die Deckelfläche mit einem großflächigen Filter (3) ausgestattet ist.

3. Käfigdeckel nach Anspruch 1 oder 2,
**dadurch gekennzeichnet,**
**daß** das Flaschensilo (9) für eine senkrechte Flaschenpositionierung ausgebildet ist, wobei die Ausgestaltung des Flaschensilos (9) derart mit den einzufügenden Flaschen (12) abgestimmt ist, daß letztere im Bereich ihres nach oben zeigenden Bodens ergriffen werden können.

4. Käfigdeckel nach Anspruch 3,
**dadurch gekennzeichnet,**
**daß** das Flaschensilo (9) einen Haltekragen (18) für die Halterung von Flaschen (12) aufweist.

5. Käfigdeckel nach einem der Ansprüche 1 bis 4,
**dadurch gekennzeichnet,**
**daß** das Futtersilo (8) im wesentlichen eine zylindrische Form aufweist.

6. Käfigdeckel nach einem der Ansprüche 1 bis 5,
**dadurch gekennzeichnet,**
**daß** die Bemessungen von Futtersilo (8) und Flaschensilo (9) derart sind, daß sich die Tiere dazwischen bewegen können.

7. Käfigdeckel nach einem der Ansprüche 1 bis 6,
**dadurch gekennzeichnet,**
**daß** die Deckel (10, 11) als Metalldeckel mit einem konischen, dicht schließenden Sitz (13) ausgebildet sind.

8. Käfigdeckel nach einem der Ansprüche 1 bis 7,
**dadurch gekennzeichnet,**
**daß** die Durchbrechungen (5, 6) im Bereich einer Stirnseite (4) angeordnet sind und daß die Käfigdeckelfläche außerhalb der Durchbrechungen (5, 6) im wesentlichen der Unterbringung des Filters (3) dient.

9. Käfigdeckel nach einem der Ansprüche 1 bis 8,
**dadurch gekennzeichnet,**
**daß** der Filter (3) dazu dient, daß der Tierkäfig (2) mit der Außenluft in Verbindung steht.

10. Käfigdeckel nach einem der Ansprüche 1 bis 8,
**dadurch gekennzeichnet,**
**daß** der Filter (3) von einer Haube überspannt wird, die einen in ein Abluftsystem mündenden Ausgang aufweist.

11. Käfigdeckel nach einem der Ansprüche 1 bis 10,
**dadurch gekennzeichnet,**
**daß** der Filter (9) zwei durchbrochene Platten (15, 16) aufweist, zwischen die ein Filtermaterial (14) einfügbar ist.

12. Käfigdeckel nach Anspruch 11,
**dadurch gekennzeichnet,**
**daß** eine der durchbrochenen Platten (15, 16) zur Einfügung des Filtermaterials (14) wegbewegbar ausgebildet ist.

13. Käfigdeckel nach Anspruch 11 oder 12,
**dadurch gekennzeichnet,**
**daß** die dem Tierkäfig (2) zugewandte Platte (16) als feinmaschiges Gitter ausgebildet ist.

14. Käfigdeckel nach einem der Ansprüche 11 bis 13,
**dadurch gekennzeichnet,**
**daß** die Durchbrechungen (26) der außenliegenden Platte (15) einen hohen Flächenanteil aufweisen.

15. Käfigdeckel nach einem der Ansprüche 1 bis 14,
**dadurch gekennzeichnet,**
**daß** er in seinem Auflagebereich auf den Tierkäfig (2) eine umlaufende Dichtung (17) aufweist.

## Claims

1. A cage lid (1) for an animal cage (2),
**characterized in**
**that** it exhibits two holes (5, 6), a fodder silo (8) being attached to the underside of the cage lid (7) below one said hole (5) and a bottle silo (9) being attached to the underside of the cage lid (7) below said other hole (6), which holes (5, 6) can be closed by covers (10, 11).

2. A cage lid as defined in claim 1,
**characterized in**
**that** the surface of the lid is provided with a large-area filter (3).

3. A cage lid as defined in claim 1 or claim 2,
**characterized in**
**that** the bottle silo (9) is adapted for a vertical bottle position, said bottle silo (9) being designed to suit the bottle (12) to be inserted such that the latter can be grasped on its upwardly oriented bottom region.

4. A cage lid as defined in claim 3,
**characterized in**
**that** the bottle silo (9) exhibits a retaining collar (18) to hold the bottle (12).

5. A cage lid as defined in any one of claims 1 to 4,
**characterized in**
**that** the fodder silo (8) has a substantially cylindrical shape.

6. A cage lid as defined in any one of claims 1 to 5,
**characterized in**
**that** the dimensions of the fodder silo (8) and of the bottle silo (9) are such that the animals can move between them.

7. A cage lid as defined in any one of claims 1 to 6,
**characterized in**
**that** the covers (10, 11) are in the form of metal covers exhibiting a conical, tight-fitting seat (13).

8. A cage lid as defined in any one of claims 1 to 7,
**characterized in**
**that** the holes (5, 6) are disposed in the vicinity of an end edge (4) and that the cage lid area not encompassing the holes (5, 6) substantially serves to accommodate the filter (3).

9. A cage lid as defined in any one of claims 1 to 8,
**characterized in**
**that** the filter (3) serves the purpose of providing means of connection between the animal cage (2) and the external atmosphere.

10. A cage lid as defined in any one of claims 1 to 8,
**characterized in**
**that** the filter (3) is covered by a hood whose outlet opens into an exhaust vent installation.

11. A cage lid as defined in any one of claims 1 to 10,
**characterized in**
**that** the filter (9) has two perforated plates (15, 16), between which a filter medium (14) can be placed.

12. A cage lid as defined in claim 11,
**characterized in**
**that** one of said perforated plates (15, 16) is adapted to be moved aside for insertion of the filter medium (14).

13. A cage lid as defined in claim 11 or claim 12,
**characterized in**
**that** the plate (16) facing the animal cage (2) is in the form of a fine-mesh grille.

14. A cage lid as defined in any one of claims 11 to 13,
**characterized in**
**that** the holes (26) in the outward plate (15) have a large area.

15. A cage lid as defined in any one of claims 1 to 14,
**characterized in**
**that** it has a continuous gasket (17) covering the area in which it rests on the animal cage (2).

## Revendications

1. Couvercle de cage (1) pour une cage (2) pour animaux, **caractérisé en ce qu'**il présente deux perforations (5, 6), sur la face intérieure (7) d'une des perforations (5), un réservoir à aliments (8) étant rajouté et sur l'autre perforation (6), un réservoir à eau (9) et **en ce que** les perforations (5, 6) sont refermables par des couvercles (10, 11)

2. Couvercle de cage selon la revendication 1, **caractérisé en ce que** la surface de couvercle est munie d'un filtre à grande surface (3).

3. Couvercle de cage selon la revendication 1, **caractérisé en ce que** le réservoir à eau (9) est réalisé pour un positionnement vertical des bouteilles, la réalisation du réservoir à eau (9) étant adaptée aux bouteilles à introduire (12) de sorte que ces dernières puissent être saisies dans la zone de leur fond dirigé vers le haut.

4. Couvercle de cage selon la revendication 3, **caractérisé en ce que** le réservoir à bouteille (9) présente un col de retenue (18) pour le maintien de bouteilles (12).

5. Couvercle de cage selon l'une des revendications 1 à 4 1, **caractérisé en ce que** le réservoir à aliments (8) présente sensiblement une forme cylindrique.

6. Couvercle de cage selon l'une des revendications 1 à 4 1, **caractérisé en ce que** les dimensions du réservoir à nourriture (8) et du réservoir à bouteille (9) sont choisies de sorte que les animaux peuvent se bouger.

7. Couvercle de cage selon l'une des revendications 1 à 6, **caractérisé en ce que** les couvercles (10, 11) sont réalisés comme couvercle métallique avec un siège conique hermétique (13).

8. Couvercle de cage selon l'une des revendications 1 à 7 1, **caractérisé en ce que** les percées (5, 6) sont disposées dans la zone d'une face avant (4) et **en ce que** la surface de couvercle de cage sert á l'extérieur des percées (5, 6) sensiblement á loger le filtre (3).

9. Couvercle de cage selon l'une des revendications 1 à 8 1, **caractérisé en ce que** le filtre (3) sert à relier la cage (2) pour animaux à l'air extérieur.

10. Couvercle de cage selon l'une des revendications 1 à 8 1, **caractérisé en ce que** le filtre (3) est recouvert d'une cloche qui présente une sortie débouchant dans un système d'air d'échappement.

11. Couvercle de cage selon l'une des revendications 1 à 10 1, **caractérisé en ce que** le filtre (9) se composent de deux plaques perforées (15, 16) entre lesquelles est inséré un matériau filtrant (14).

12. Couvercle de cage selon la revendication 11, **caractérisé en ce que** l'une des plaques perforées (15, 16) est réalisée amovible pour l'insertion du matériau filtrant (14).

13. Couvercle de cage selon la revendication 11 ou 12, **caractérisé en ce que** la plaque (16) tournée vers la cage pour animaux (2) est réalise comme une grille á maillage fin.

14. Couvercle de cage selon l'une des revendications 11 à 13 1, **caractérisé en ce que** les perforations (26) de la plaque externe (15) présentent une partie de surface élevée.

15. Couvercle de cage selon l'une des revendications 1 à 14 1, **caractérisé en ce qu'**il présente dans sa zone d'application sur la cage pour animaux (2) une garniture d'étanchéité circulaire (17)
